# EUROPÄISCHE PATENTSCHRIFT

(11) **EP 1 439 281 B1**
(45) Veröffentlichungstag und Bekanntmachung des Hinweises auf die Patenterteilung: **29.08.2012**
(21) Anmeldenummer: 04090002.9
(22) Anmeldetag: 06.01.2004
(51) Int. Cl.: F01D 5/16, F01D 5/18, F04D 29/32, F04D 29/66, F01D 5/14

(54) **Fanschaufel für ein Gasturbinentriebwerk**
Gas turbine engine blade
Aube de turbine à gaz

(30) Priorität: 18.01.2003 DE 10301755
(43) Veröffentlichungstag der Anmeldung: 21.07.2004
(73) Patentinhaber: Rolls-Royce Deutschland Ltd & Co KG, 15827 Dahlewitz (DE)
(72) Erfinder: Schreiber, Karl, OT Mellensee 15838 Am Mellensee (DE)
(74) Vertreter: Gross, Felix

(56) Entgegenhaltungen:
- EP-A- 0 924 380
- CA-A1- 2 047 276
- GB-A- 202 288
- GB-A- 1 089 247
- US-A- 3 117 716
- US-A- 4 274 806
- US-A- 5 480 284
- US-A- 6 042 338

## Beschreibung

Die Erfindung bezieht sich auf eine Fanschaufel aus massivem Material für ein Gasturbinentriebwerk, mit einem an einer Fanscheibe befestigten Schaufelfuß und einer gegenüberliegenden Schaufelspitze, wobei ausgehend von der freien Stirnseite an der Schaufelspitze in einem auf das obere Drittel der Fanschaufel begrenzten Schaufelspitzenteil mindestens ein sich in Richtung des Schaufelfußes erstreckender, nur an der Schaufelspitze offener Hohlraum eingeformt ist.

Die Gebläseschaufeln oder Fanschaufeln sind die ersten rotierenden Gebilde in einem Gasturbinentriebwerk. Sie sind nicht nur der angesaugten eintretenden Luft, sondern auch überwiegend in der Startphase angesaugten Fremdkörpern, wie beispielsweise Vögeln, ausgesetzt. Um den extrem hohen Belastungen, zum Beispiel bei einem Vogelschlag, standzuhalten, sind die in massiver Bauweise aus einem hochfesten Metall, zum Beispiel Titan, oder einer entsprechenden Legierung gefertigten Fanschaufeln entsprechend stark dimensioniert. Aufgrund des dadurch bedingten hohen Gewichts sind die Fanschaufeln zum einen sehr teuer und zum anderen ist die mechanische Belastung auf der Grundlage der Eigenschwingungen und der Schwingungsamplitude sowie der Zentrifugalkräfte hoch. Entsprechend dem Gewicht der Fanschaufeln müssen auch die Fan-Schutzgehäuse oder Fan-Containments dimensioniert werden. Damit sind insgesamt eine weitere Gewichtszunahme und zusätzliche Kosten verbunden.

Für Flugzeugtriebwerke mit hoher Leistung wurden zur Verringerung des Gewichts und zur Beseitigung der durch eine zu große Masse bedingten Nachteile bereits Fanschaufeln mit im Innern ausgebildeten geschlossenen Hohlräumen vorgeschlagen. Die zur Herstellung derartiger Hohlschaufeln beispielsweise in der US 6 033 186 und in der US 5 692 881 beschriebenen Verfahren sind jedoch sehr kostenaufwendig. Der hohe Kostenaufwand für derartige Hohlfanschaufeln steht insbesondere bei Triebwerken kleiner und mittlerer Leistung in keinem effizienten Verhältnis zu der Gewichtseinsparung und den dadurch erzielten Vorteilen.

Eine Fanschaufel der eingangs genannten Art ist aus GB-A-1089247 vorbekannt. Diese umfasst einen Schaufelfuß aus massivem Material und ist über die gesamte Schaufelblattlänge als von einer Blechstruktur gebildeter Hohlkörper mit zwischen zwei Flankenblechen vorgesehenenen Versteifungselementen ausgeführt. Damit besteht diese Fanschaufel aus einer am Schaufelfuß angeschweißten, von zwei Flankenblechen begrenzten Hohlstruktur, wobei ausgehend von der freien Stirnseite an der Schaufelspitze in einem auf das obere Drittel der Fanschaufel begrenzten Schaufelspitzenteil ein nur an der Schaufelspitze offener und von zwei Versteifungsrippen und einem Abstandshalter begrenzter Hohlraum eingeformt ist.

Eine entsprechend ausgebildete Fanschaufel ist auch aus US-4,097,192 vorbekannt.

Die US-A-5480284 offenbart eine aus massivem Material bestehende Fanschaufel, die im oberen Teil des Schaufelblattes einen in Längsrichtung verlaufenden als Lüftungskanal dienenden Hohlraum aufweist, der über eine Auslassöffnung an der Schaufelspitze und eine Vielzahl seitlicher Öffnungen an die Saugseite der Fanschaufel angeschlossen ist, um aus der sich verdickenden Grenzschicht an der Schaufeloberfläche Luft abzuziehen und dadurch den Wirkungsgrad des Fangebläses zu verbessern.

In der CA-A1-2047276 werden Dampfturbinenschaufeln beschrieben, die im Bereich der Schaufelspitzen zur Erhöhung des Wirkungsgrades der Turbine verbreitert sind und in dem verbreiterten Spitzenbereich zum Ausgleich des dadurch erhöhten Gewichts einen von der Turbinenschaufelspitze ausgehenden Hohlraum aufweisen.

Der Erfindung liegt die Aufgabe zugrunde, eine in der Masse reduzierte und mechanisch hoch belastbare Fanschaufel für Gasturbinentriebwerke zu entwickeln, die einfach und kostengünstig hergestellt werden kann und dabei hohen Sicherheitsanforderungen gerecht wird.

Erfindungsgemäß wird diese Aufgabe mit einer gemäß den Merkmalen des Patentanspruchs 1 ausgebildeten Fanschaufel dadurch gelöst, dass der mindestens eine Hohlraum flächig an der Saugeite ausgebildet und mit einem Blech stoffschlüssig abgedeckt ist. Die erfindungsgemäße Fanschaufel kann einfach und kostengünstig hergestellt werden und wird dabei auch hohen Sicherheitsanforderungen gerecht.

Aus den Unteransprüchen ergeben sich weitere Merkmale und vorteilhafte Weiterbildungen der Erfindung.

Der Grundgedanke der Erfindung liegt darin, dass eine aus massivem Material bestehende, zum Beispiel aus Titan geschmiedete Fanschaufel in einem im oberen Drittel der Schaufel liegenden Schaufelspitzenbereich einen von der Schaufelspitzenstirnseite ausgehenden, nur oben offenen Hohlraum oder mehrere durch Versteifungsstege voneinander getrennte Hohlräume ausweist. Das heißt, der überwiegende Teil der Fanschaufel besteht ausgehend vom Schaufelfuß aus massivem Material, während nur ein begrenzter Bereich an der Schaufelspitze mit sich zum Schaufelfuß hin erstreckenden Hohlräumen versehen ist. Der Hohlraum erstreckt sich lediglich auf einen Schaufelbereich, der relativ geringen Betriebsbelastungen ausgesetzt ist. Die Betriebsbelastungen sind bei zyklischer Belastung vorzugsweise < 150 Mpa (Megapascal).

Die Hohlräume werden unmittelbar, zum Beispiel mit elektrochemischen Bearbeitungsverfahren, in das massive Material eingeformt. Es ist aber auch denkbar, die Fanschaufel aus zwei Teilen zu fertigen, und zwar einem Massivschaufelteil (massives Schaufelfußteil) und einem mit diesem durch ein Fügeverfahren verbundenen, separat gefertigten Hohlschaufelteil (hohles Schaufelspitzenteil). Das separat hergestellte Hohlschaufelteil kann auch aus einem Blechmantel gebildet werden sowie aus einem anderen Material als das des Massivschaufelteils bestehen.

Mit einer vergleichsweise geringen und vor allem auf einfache Weise zu erzielenden Gewichtsreduzierung in einem von der Schaufelspitze ausgehenden, im oberen Drittel liegenden begrenzten Bereich können die am Schaufelfuß wirkenden Fliehkräfte und Spannungen in erheblichem Umfang reduziert bzw. optimal eingestellt werden, wobei überraschenderweise trotz der Hohlraumbildung die Steifigkeit der Schaufel nicht beeinträchtigt wird. Beispielsweise konnten mit einer Gewichtsverringerung im Spitzenbereich von 3% die am Schaufelfuß wirkenden Zentrifugalkräfte um 12% gesenkt werden. Mit der Verringerung der Masse lediglich im Spitzenbereich durch die von der freien Stirnseite her eingeformten Hohlräume wird die wirksame Länge der Schaufelmasse, und zwar im Sinne einer Schaufelverkürzung, insgesamt geringer, so dass die Schwingungsamplituden sinken und die Eigenfrequenzen steigen und die Fanschaufeln mithin in erheblich geringerem Umfang beansprucht und geschädigt werden. Bei der Ausbildung mehrerer im Abstand nebeneinander liegender Hohlräume entstehen Versteifungsstege zwischen diesen, die zur mechanischen Festigkeit des Schaufelspitzenteils beitragen. Ein weiterer wesentlicher Vorteil der vorgeschlagenen Fanschaufel liegt in der einfachen, kostengünstigen Herstellung, zumal die Ausbildung der Hohlräume ohne Schwierigkeiten in die üblichen Fertigungstechnologien für massiv ausgebildete Fanschaufeln eingebunden werden kann.

Die Länge und die Querschnittsgröße und -form ist über die Breite der Fanschaufel variabel. Vorzugsweise sind die mittig ausgebildeten Hohlräume länger und größer als die seitlichen, und besonders bevorzugt weist der nahe der Eintrittskante gelegene Hohlraum die geringste Länge und Querschnittsgröße auf. Mit der Anordnung sowie der Form und Größe der Hohlräume in der Schaufelspitze kann die Spannungsverteilung im Schaufelfuß optimal eingestellt werden. Es ist ein wesentliches Erfindungskriterium, dass die Größe und Ausbildung der von der Schaufelspitze ausgehenden Hohlräume die Steifigkeit der Fanschaufel nicht beeinträchtigt.

Gemäß einem weiteren Merkmal der Erfindung ist es auch möglich, die Fanschaufel aus zwei separat gefertigten Teilen herzustellen, und zwar einem massiven Fußschaufelteil und einem die ausgeformten Hohlräume aufweisenden Schaufelspitzenteil, die dann nach bekannten Fügeverfahren miteinander verbunden werden.

Ein Ausführungsbeispiel der Erfindung wird anhand der Zeichnung näher erläutert. Es zeigen:
- Fig. 1: eine Draufsicht einer erfindungsgemäß ausgebildeten Fanschaufel für ein Gasturbinentriebwerk;
- Fig. 2: eine Seitenansicht des oberen Teils einer Fanschaufel mit durch strichlierte Linien angedeuteten Hohlräumen;
- Fig. 3: einen Schnitt A-A nach Fig. 1, in dem ein in der Fanschaufel ausgebildeter Hohlraum im Querschnitt dargestellt ist; und
- Fig. 4: eine Seitenansicht einer aus einem massiven unteren Teil und einer hohl ausgebildeten Schaufelspitze zusammengesetzten Fanschaufel.

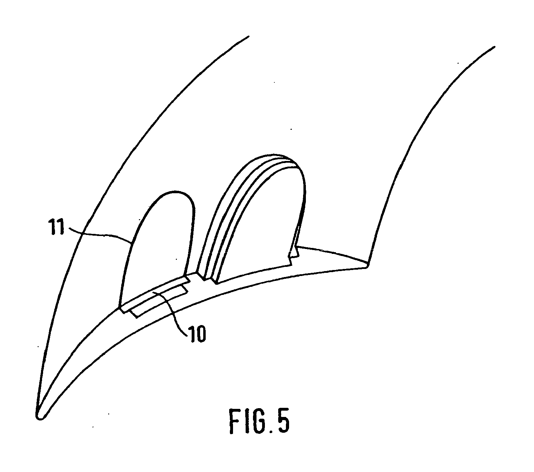

- Fig. 5: Eine Ansicht mit von der Schaufelsaugseite eingebrachten Taschen, die anschließend mit aerodynamisch angepassten Blechen verschlossen werden.

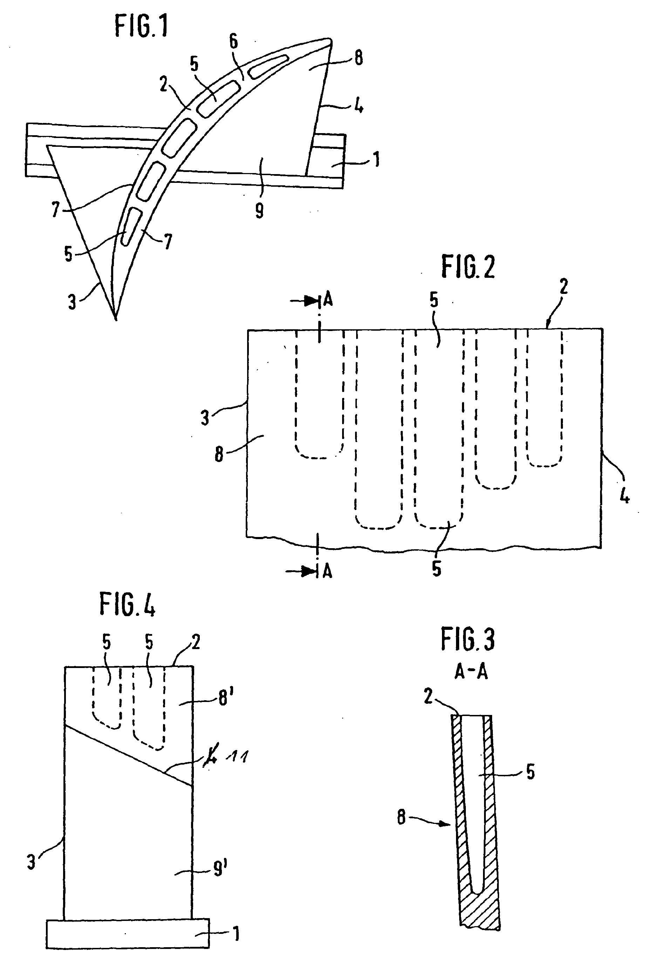

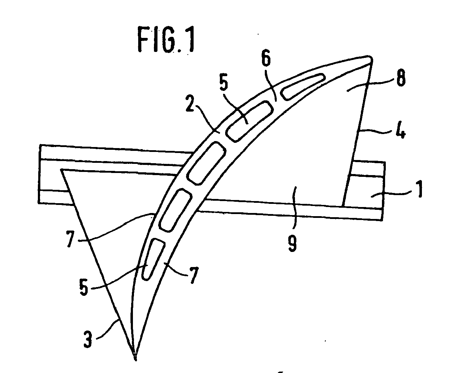

Die in Fig. 1 gezeigte Fanschaufel aus Titan umfasst einen Schaufelfuß 1 und eine Schaufelspitze 2. Sie weist eine Eintrittskante 3 und eine Austrittskante 4 auf. Im oberen Drittel der Fanschaufel, dem Schaufelspitzenteil 8, befinden sich von der Schaufelspitze 2 ausgehende Hohlräume 5, die durch Versteifungsstege 6 voneinander getrennt sind. Durch die Versteifungsstege 6 und die Stärke der verbleibenden Schaufelwand 7 ist die Steifigkeit der Fanschaufel und die erforderliche Schubspannungsübertragung gewährleistet. Die Hohlräume 5 haben eine im Querschnitt im Wesentlichen rechteckige Form. Es sind aber auch andere Querschnittsformen, zum Beispiel rund oder oval, denkbar. Wie aus den Figuren 2 bis 4 erkennbar, befinden sich die Hohlräume 5 nur im Spitzenbereich oder etwa im oberen Drittel der im übrigen Bereich, dem Schaufelfußteil 9, massiv ausgebildeten Fanschaufel. Der Verlauf der Längsachse der langgestreckten Hohlräume 5 ist der Form der Fanschaufel angepasst. Beispielsweise folgt die Längsachse der im oberen Schaufeldrittel befindlichen Hohlräume 5 dem Twist der in Fig. 1 dargestellten Fanschaufel. Wie Fig. 3 zeigt, verringert sich die Querschnittsfläche des jeweiligen Hohlraums 5 in seinem unteren Teil (im Schaufelinneren) allmählich, um so die Kerbspannungen im Übergangsbereich zum massiven Teil der Fanschaufel gering zu halten.

Aus den Figuren 2 und 4 wird deutlich, dass die Hohlräume 5 in ein und derselben Fanschaufel bis zu einer unterschiedlichen Tiefe in das massive Material eingearbeitet sein können und auch eine unterschiedliche Querschnittsgröße aufweisen können. So befindet sich der an der Eintrittskante 3 liegende Hohlraum 5 in ausreichendem Abstand von dieser Kante und ist zudem im Querschnitt kleiner und in kürzerer Länge ausgebildet, um den durch Vogelschlag bedingten hohen Belastungen in diesem Bereich gerecht zu werden. Im mittleren Schaufelbereich sind die Hohlräume 5, wie Fig. 2 zeigt, hingegen tiefer ausgebildet, um in diesem Bereich großer Wandstärke möglichst viel Material aus dem massiven Teil zu entfernen und eine große Gewichtsreduzierung zu erzielen.

Eine weitere Ausführungsvariante der vorliegenden Erfindung ist in Fig. 4 wiedergegeben. Danach ist die Fanschaufeln aus zwei separat gefertigten und dann in einem geeigneten Fügeverfahren miteinander verbundenen Einzelteilen, nämlich einem Hohlschaufelteil 8' und einem Massivschaufelteil 9', hergestellt.

Die Hohlräume 5 können von der Schaufelspitze 2 aus in einem geeigneten Verfahren, zum Beispiel durch erosive e-lektro-chemische Bearbeitung, hergestellt werden. Bei der aus zwei Teilen (8', 9') gefertigten Fanschaufel, mit der eine noch größere Gewichtseinsparung erzielt werden kann, ist es zudem möglich, für das Hohlschaufelteil 8' zur Verbesserung der Vogelschlagbeständigkeit ein anderes Material, zum Beispiel ein duktileres Titan (wie zum Beispiel TiCu2 oder Ti64 half) einzusetzen. Ein separat gefertigtes Schaufelspitzenteil 8' kann auch aus einem Blechmantel aus Titanbasis-Feinguss bestehen.

### Bezugszeichenliste

- 1: Schaufelfuß
- 2: Schaufelspitze
- 3: Eintrittskante
- 4: Austrittskante
- 5: Hohlraum
- 6: Versteifungssteg
- 7: Schaufelwand
- 8: Schaufelspitzenteil
- 9: Schaufelfußteil
- 8': separates Hohlschaufelteil
- 9': separates Massivschaufelteil
- 10: Titanblech
- 11: Laserschweißnaht

## Patentansprüche

1. Fanschaufel aus massivem Material für ein Gasturbinentriebwerk, mit einem an einer Fanscheibe befestigten Schaufelfuß (1) und einer gegenüberliegenden Schaufelspitze (2), wobei ausgehend von der freien Stirnseite an der Schaufelspitze (2) in einem auf das obere Drittel der Fanschaufel begrenzten Schaufelspitzenteil (8) mindestens ein sich in Richtung des Schaufelfußes (1) erstreckender, nur an der Schaufelspitze (2) offener Hohlraum (5) eingeformt ist,**dadurch gekennzeichnet, dass** der mindestens eine Hohlraum (5) flächig an der Saugseite ausgebildet und mit einem Blech (10) stoffschlüssig abgedeckt ist.

2. Fanschaufel nach Anspruch 1, **dadurch gekennzeichnet, dass** mehrere Hohlräume (5) vorgesehen sind und die Länge und/oder die Querschnittsfläche der Hohlräume (5) über die Breite der Fanschaufel unterschiedlich sind.

3. Fanschaufel nach Anspruch 2, **dadurch gekennzeichnet, dass** die in der Nähe der Eintrittskante der Fanschaufel liegenden Hohlräume (5) eine geringe Länge und/oder Querschnittsfläche haben.

4. Fanschaufel nach Anspruch 2, **dadurch gekennzeichnet, dass** die mittig angeordneten Hohlräume (5) die größte Tiefe haben.

5. Fanschaufel nach Anspruch 1, **dadurch gekennzeichnet, dass** die Querschnittsform der Hohlräume (5) im wesentlichen rechteckig, oval oder rund ist.

6. Fanschaufel nach Anspruch 1, **dadurch gekennzeichnet, dass** die Längsachse des mindestens einen Hohlraums (5) dem Schaufeltwist folgt.

7. Fanschaufel nach Anspruch 1, **dadurch gekennzeichnet, dass** der Querschnitt des mindestens einen Hohlraums (5) an seinem unteren, zum Schaufelfuß (3) weisenden Ende allmählich kleiner wird und keilförmig ausläuft.

8. Fanschaufel nach Anspruch 1, **dadurch gekennzeichnet, dass** die Fanschaufel aus einem Massivschaufelteil (9') und einem mit diesem verbundenen Hohlschaufelteil (8') besteht.

9. Fanschaufel nach Anspruch 8, **dadurch gekennzeichnet, dass** das Hohlschaufelteil (8') aus einem Blechmantel besteht.

10. Fanschaufel nach Anspruch 8, **dadurch gekennzeichnet, dass** das Hohlschaufelteil (8') aus massivem Material besteht.

11. Fanschaufel nach Anspruch 8, **dadurch gekennzeichnet, dass** das einer geringeren Belastung ausgesetzte Hohlschaufelteil (8') aus einem anderen Material als das Massivschaufelteil (9') besteht.

12. Fanschaufel nach Anspruch 1, **dadurch gekennzeichnet, dass** die mehreren Hohlräume (5) durch Versteifungsstege (6) voneinander getrennt sind.

## Claims

1. Fan blade in a solid material for a gas-turbine engine, with a blade root (1) attached to a fan disk and an opposite blade tip (2), with at least one open cavity (5) starting out from the free face at the blade tip (2) in a blade tip portion (8) restricted to the upper third of the fan blade and extending in the direction of the blade root (1) being provided only at the blade tip (2), **characterized in that** the at least one cavity (5) is flatly formed on the suction side and blanked with a plate (10) by positive substance jointing.

2. Fan blade in accordance with Claim 1, **characterized in that** several cavities (5) are provided and the length and/or the cross-sectional area of the cavities (5) vary over the width of the fan blade.

3. Fan blade in accordance with Claim 2, **characterized in that** the cavities (5) situated close to the leading edge of the fan blade have a small length and/or cross-sectional area.

4. Fan blade in accordance with Claim 2, **characterized in that** the central cavities (5) have the greatest depth.

5. Fan blade in accordance with Claim 1, **characterized in that** the cross-sectional shape of the cavities (5) is essentially rectangular, oval or round.

6. Fan blade in accordance with Claim 1, **characterized in that** the longitudinal axis of the at least one cavity (5) follows the blade twist.

7. Fan blade in accordance with Claim 1, **characterized in that** the cross-section of the at least one cavity (5) gradually decreases at its bottom end facing the blade root (3) and runs out in the form of a wedge.

8. Fan blade in accordance with Claim 1, **characterized in that** the fan blade includes a solid blade portion (9') and a hollow blade portion (8') connected to the latter.

9. Fan blade in accordance with Claim 8, **characterized in that** the hollow blade portion (8') is made of a sheet-metal shell.

10. Fan blade in accordance with Claim 8, **characterized in that** the hollow blade portion (8') is made of solid material.

11. Fan blade in accordance with Claim 8, **characterized in that** the lesser stressed hollow blade portion (8') is made of a material that differs from that of the solid blade portion (9').

12. Fan blade in accordance with Claim 1, **characterized in that** the several cavities (5) are separated from each other by reinforcing ribs (6).

## Revendications

1. Aube de soufflante en matériau massif destinée à un moteur à turbine à gaz, comprenant un pied d'aube (1) fixé à un disque de soufflante et un bout d'aube (2) opposé, sachant que dans laquelle est formée au moins une cavité ouverte (5) seulement au bout d'aube (2), partant de la face frontale libre sur le bout d'aube (2) dans une partie de bout d'aube (8) limitée au tiers supérieur de l'aube de soufflante et s'étendant en direction du pied d'aube (1), **caractérisée en ce que** l'au moins une cavité (5) est façonnée avec une forme aplatie du côté aspiration et est recouverte d'une plaque (10) par liaison permanente de matière.

2. Aube de soufflante selon la revendication n° 1, **caractérisée en ce que** sont prévues plusieurs cavités (5) et que les longueurs et/ou les aires des sections transversales des cavités (5) sur la largeur de l'aube de soufflante sont différentes.

3. Aube de soufflante selon la revendication n° 2, **caractérisée en ce que** les cavités (5) situées à proximité du bord d'attaque de l'aube de soufflante ont une faible longueur et/ou aire de section transversale.

4. Aube de soufflante selon la revendication n° 2, **caractérisée en ce que** les cavités (5) situées au centre ont la plus grande profondeur.

5. Aube de soufflante selon la revendication n° 1, **caractérisée en ce que** la forme des sections transversales des cavités (5) est pour l'essentiel rectangulaire, ovale ou circulaire.

6. Aube de soufflante selon la revendication n° 1, **caractérisée en ce que** l'axe longitudinal de l'au moins une cavité (5) suit la courbure de l'aube.

7. Aube de soufflante selon la revendication n° 1, **caractérisée en ce que** la section transversale de l'au moins une cavité (5) diminue graduellement à son extrémité inférieure, orientée vers le pied d'aube (3), et devient cunéiforme.

8. Aube de soufflante selon la revendication n° 1, **caractérisée en ce que** l'aube de soufflante est constituée d'une partie d'aube massive (9') et d'une partie d'aube creuse (8') reliée à celle-ci.

9. Aube de soufflante selon la revendication n° 8, **caractérisée en ce que** la partie d'aube creuse (8') est constituée par une enveloppe en tôle.

10. Aube de soufflante selon la revendication n° 8, **caractérisée en ce que** la partie d'aube creuse (8') est constituée d'un matériau massif.

11. Aube de soufflante selon la revendication n° 8, **caractérisée en ce que** la partie d'aube creuse (8') exposée à une charge plus faible est constituée d'un autre matériau que la partie d'aube massive (9').

12. Aube de soufflante selon la revendication n° 1, **caractérisée en ce que** les plusieurs cavités (5) sont séparées les unes des autres par des nervures raidisseuses (6).
